**Europäisches Patentamt**

(19) **European Patent Office**

**Office européen des brevets**

(11) Numéro de publication: **0 005 088**
**B1**

(12) **FASCICULE DE BREVET EUROPEEN**

(45) Date de publication du fascicule de brevet: **14.10.81**

(21) Numéro de dépôt: **79400185.9**

(22) Date de dépôt: **20.03.79**

(51) Int. Cl.³: **G 01 H 5/00,**
**G 01 M 10/00,**
**E 02 B 17/00, G 09 B 25/04**

(54) Procédé et installation pour l'essai, sur maquette, des structures, ouvrages et constructions, notamment des structures métalliques, de grandes dimensions.

(30) Priorité: **23.03.78 FR 7808431**

(43) Date de publication de la demande:
**31.10.79 Bulletin 79/22**

(45) Mention de la délivrance du brevet:
**14.10.81 Bulletin 81/41**

(84) Etats Contractants Désignés:
**DE GB NL**

(56) Documents cités:
**FR - A - 2 139 257**
**FR - A - 2 289 987**

**PETROLEUM ENGINEER, vol. 46, no. 5, mai 1974 Dallas, Texas USA**
**C.A. BAINBRIDGE, "Analysing fixed steel platforms in the north sea"**
**pages 98 à 105.**

(73) Titulaire: **ETAT-FRANCAIS représenté par le DELEGUE GENERAL POUR L'ARMEMENT Bureau des Brevets et Inventions de la Délégation Générale pour l'Armement 14, rue Saint-Dominique**
**F-75997 Paris Armées (FR)**

(72) Inventeur: **Le Guet, Pierre-Loic Erick**
**133, rue Saint-Dominique**
**F-75007 Paris (FR)**

Courier Press, Leamington Spa, England.

# Procédé et installation pour l'essai, sur maquette, des structures, ouvrages et constructions, notamment des structures métalliques, de grandes dimensions.

La présente invention concerne un procédé et une installation pour l'étude sur maquette des déformations élastiques subies sous charges par des structures, ouvrages et constructions de grandes dimensions.

L'invention s'applique en particulier à l'étude sur modèles du comportement à la mer de structures métalliques fixes (pylônes, portiques reposant sur le fond de la mer) ou mobiles (navires, pylônes d'amarrage).

L'invention trouve une application particulièrement intéressante dans l'étude sur maquette des structures métalliques utilisées pour les forages pétroliers sous-marins. On sait que pour ces exploitations pétrolières en mer, on a besoin de tours ou pylônes, généralement en treillis métalliques, supportant des plates-formes de forage ou de chargement, des torchères ou d'autres installations.

Ces tours ou pylônes peuvent avoir une hauteur de plus de 150 mètres et, pour celles qui reposent au fond de la mer, leur forme est généralement pyramidale ou conique avec une base pouvant atteindre 50 mètres. Le sommet de ces tours peut culminer à 20, 30 mètres au-dessus du niveau de la mer.

Il s'agit donc de constructions extrêmement coûteuses, qu'il est difficile d'amener à pied d'oeuvre et de mettre en place.

Il est donc capital d'étudier à l'avance le comportement de telles constructions sous l'effet des vagues, de la houle, du vent et des efforts qui pourront leur être imposés en service par les installations de forage, par les accostages de navires, etc...

De telles études peuvent être faites en bassin, sur un modèle réduit de la construction envisagée. Mais, jusqu'à présent, les résultants obtenus par ces études sur maquette étaient insuffisamment précis et laissaient échapper certains phénomènes de déformations élastiques, par exemple ceux dûs aux efforts alternés, auxquels, risquait d'être soumise la construction réelle.

En effet, pour que la maquette d'une structure complexe soit fiable, les divers paramètres doivent être homogènes et le modèle doit être hydroélastiquement semblable au réel. Du fait que la gravité et l'eau sont des éléments communs aux domaine du réel et du modèle, si l'on choisit pour la maquette une échelle géométrique $\lambda$, les masses et les élasticités –celles-ci étant caractérisées par le produit du module d'élasticité E du matériau utilisé par le moment d'inertie I de la section de l'élément considéré- doivent être respectivement dans les rapports $\lambda^3$ et $\lambda^5$; si l'on adopte une échelle $=1/100$, ce qui conduit à une maquette de 1,5 à 2 mètres de hauteur dans le cas d'une structure en tubes d'acier soudés, on peut déjà rencontrer dé sérieuses difficultés dans la réalisation de la maquette si l'on utilise le même métal, car les épaisseurs des tubes seraient de l'ordre de quelques centièmes et la maquette serait incapable de résister à certains efforts localisés inévitables au cours des manipulations nécessaires au transport, à l'équipement et à l'installation en bassin du modèle. On a pu remédier, au moins partiellement, à ces difficultés en utilisant des matérieux suffisamment légers permettant de respecter la similitude des masses (poids et forces d'inertie) et des volumes (forces hydrostatiques et hydrodynamiques) avec une maquette moins fragile et de réalisation plus aisée. Mais le respect de la similitude des déformations élastiques conduit, par exemple, à réaliser un modèle à partir d'éléments composites formés d'un matériau de très faible module d'élasticité (similitude des volumes) et d'un noyau de faible section ayant un module d'élasticité beaucoup plus élevé (similitude des déformations principales). La construction d'un tel modèle, sa manipulation et son équipement en capteurs de forces et de déformations sont délicats.

On sait par ailleurs (article BAINDRIDGE extrait de la revue "Petroleum Engineer, Vol. 46, n°5, mai 1974") étudier des déformations d'une plate-forme métallique utilisable pour les forages pétroliers sous-marins en construisant une maquette à l'aide de tubes en acrylic dans l'épaisseur desquels sont noyées des jauges de contrainte.

Le brevet français 2 289 987 divulgue lui aussi un procédé de réalisation de maquettes hydroélastiques à l'aide d'éléments constitués d'une âme centrale métallique recouverte par un enrobage en matériau peu rigide. Les déformations de la structure réalisée sont mesurées à l'aide de jauges de contrainte incorporées dans l'âme métallique. La construction de tels modèles est complexe.

La présente invention permet de remédier à ces divers inconvénients, grâce à l'utilisation de maquettes de construction plus simple en permettant cependant de prévoir de manière satisfaisante le comportement, dans les conditions d'utilisation prévues, de la structure réelle, soit directement soit par l'évaluation de programmes de calculs spécialement étudiés.

Le procédé suivant l'invention, pour l'étude sur maquette des déformations élasiques subies sous charge par des structures, ouvrages et constructions de grandes dimensions, consiste: à établir la maquette sous la forme d'une pluralité de tronçon séparés; à réaliser chaque tronçon de maquette sous la forme d'un élément individuel rigide sensiblement exempt d'élasticité; à assembler les tronçons de maquette les uns aux autres pour reproduire la structure complète à étudier; l'assemblage de chaque tronçon avec les tronçons voisins étant fait au moyen d'organes de liaison élastiques de l'ensemble de la maquette; à mesurer l'amplitude des déformations locales de chacun desdits organes de liaison lorsque la maquette est soumise à des contraintes déterminées; et à cumuler ces mesures pour en déduire les déformations globales subies par la maquette et, partant, les déformations que subira la structure réelle dans des conditions de contraintes équivalentes.

Grâce à ce procédé, la souplesse de la maquette est localisée en un certain nombre de points précis, sur la plus grande dimension de la maquette, au lieu d'être répartie en une infinité de points sur cette dimension.

Dans le cas où le procédé suivant l'invention est appliqué à l'étude sur maquette du comportement à la mer d'une structure hydroélastiquement déformable de grandes dimensions, notamment d'une structure métallique verticale de grande hauteur pour forages sous-marins, on utilise une installation caractérisée: en ce que la maquette est réalisée au moyen de tronçons séparés divisant la structure en une pluralité de tranches horizontales qui sont superposées; en ce que chaque tronçon est assemblé au tronçon immédiatement inférieur par un système de suspension travaillant en traction faisant partie des organes de liaison élastiques dynamométriques précités et en ce que des capteurs de déplacement sont interposés entre chaque tronçon et les tronçons immédiatement adjacents, lesdits capteurs détectant le déplacement des tronçons relativement à ses voisins.

Grâce à cette disposition, les organes de liaison dynamo métriques interposés entre les tronçons peuvent supporter, sans modification notable de la précision des mesures recueillies par les capteurs précités, les efforts alternés de compression qui peuvent résulter soit des efforts verticaux soit des moments fléchissants imposés à l'ensemble de la structure pendant l'essai.

L'invention sera mieux comprise à la lecture de la description détaillée qui va suivre et à l'examen des dessins annexés qui représentent à titre d'exemple non limitatif, un mode de réalisation de l'invention.

La Fig. 1 est une vue schématique en perspective de la maquette d'essai d'une tour ou pylône métallique pour l'exploitation de pétrole en mer.

La Fig. 2 est une vue de détail en coupe verticale de l'un des systèmes de raccordement et de mesure de déplacement relatif entre deux tronçons adjacents.

La Fig. 3 est une vue en plan du même système.

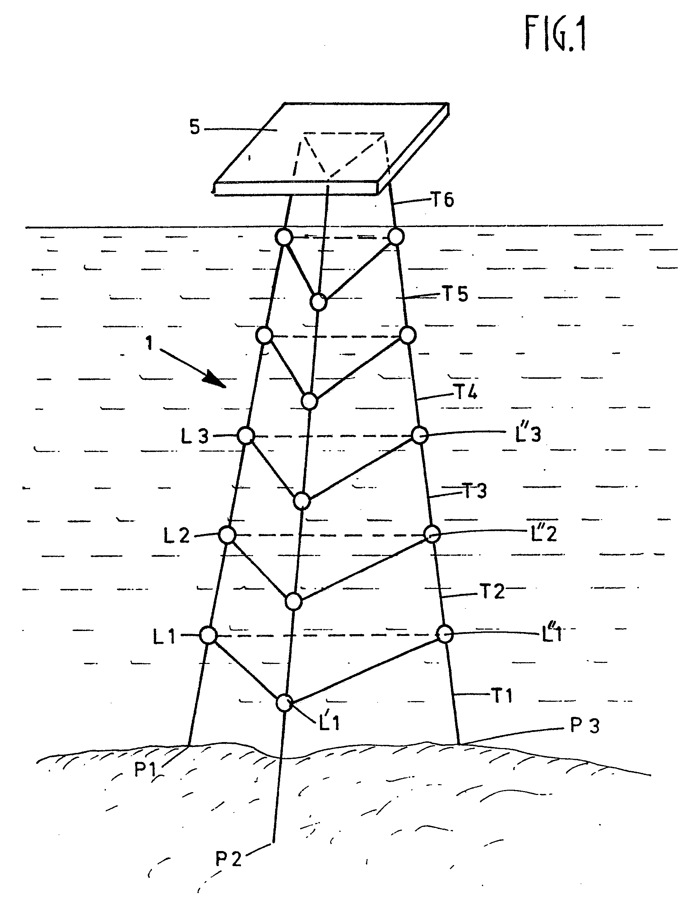

La structure à étudier, représentée sur la Fig. 1 est par exemple un pylône 1 en treillis métallique pour exploitation de pétrole en mer. Un tel pylône peut avoir une hauteur de 150 mètres et peut dépasser au-dessus du niveau de la mer de 20 à 30 mètres. On a représenté sur la figure un pylône tripode dont les trois pieds $P_1$, $P_2$, $P_3$ reposent ou sont ancrés sur le fond de la mer, l'écartement entre les pieds pouvant atteindre 50 mètres par exemple. Bien entendu, l'invention s'applique également à l'étude de structure ayant toute autre section horizontale que triangulaire. Le pylône 1 peut être destiné à supporter une plate-forme 5 sur laquelle peuvent être montées toutes installations (non représentées), nécessaires à l'exploitation envisagée. Le pylône une fois en place sur le lieu choisi sera soumis aux effets de la mer (houle, vagues, courants), du vent, des efforts produits par le matériel de forage ou d'exploitation monté sur la plate-forme 5, et éventuellement des navires qui pourraient venir s'amarrer ou accoster. Ce sont les déformations imposées au pylône pour ces différents efforts que le procédé suivant l'invention permet d'etudier sur une maquette, par exemple à l'échelle 1/100.

Pour établir la maquette, on divise la structure en un certain nombre de tronçons, par exemple 6, $T_1$, $T_2$ ... $T_6$ dont chacun est construit séparément à l'échelle choisie, chacun des tronçons constituant par lui-même un ensemble rigide. Pour respecter la proportionnalité des longueurs et des masses, il est avantageux pour des raisons ultérieures de réglages des masses et des inerties d'utiliser, pour la construction des éléments de la maquette, des matériaux légers, par exemple des tubes ou profilés en matière plastique renforcée de fibre de verre, en remplacement des tubes ou profilés en acier de la structure grandeur nature.

Dans le cas représenté, chacun des tronçons rigides constitue donc "une tranche" de la structure ayant la forme d'un tronc de pyramide.

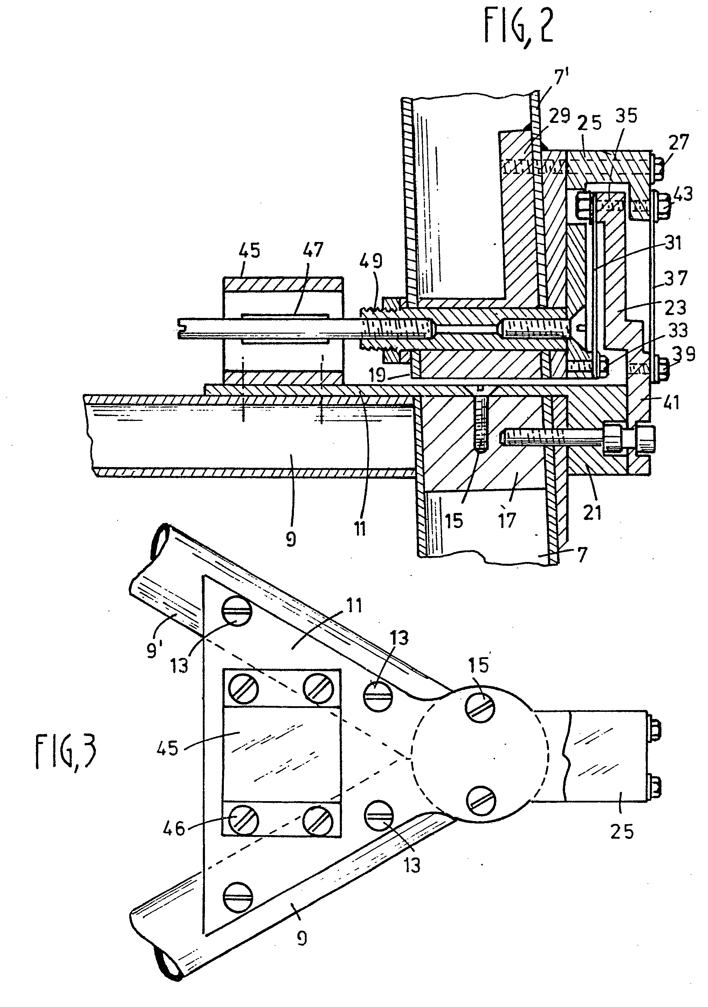

Tous les tronçons de la maquette sont ensuite superposés, pour former la maquette complète, l'assemblage de chaque tronçon aux tronçons adjacents étant fait au moyen d'organes de liaison déformables élastiquement $L_1$, $L'_1$, $L_2$, $L'_2$, $L''_2$ qui seront décrits en détail à propos des figures 2 et 3 sur chacun desquels la déformation individuelle sous effort peut être mesurée à chaque instant.

La maquette assemblée est ensuite immergée dans un bassin d'essai où l'on reproduit les diverses conditions auxquelles la structure grandeur nature pourra être soumise.

On a représenté en coupe sur la Fig. 2, et en élévation sur la Fig. 3, l'un des angles supérieurs de l'un des tronçons. Cet angle supérieur comprend: un profilé ou tube 7 formant l'arête sensiblement verticale du tronçon considéré et deux tubes ou profilés 9—9' formant deux arêtes horizontales du tronçon. Sur la maquette, ces tubes sont en alliage léger ou, de préférence, en matière plastique renforcée et ils sont assemblés rigidement entre eux, par exemple, au moyen d'une plaque d'équerrage 11, de forme triangulaire dans le cas d'un pylône tripode, cette plaque étant fixée par des vis 13 dans les tubes 9—9' et par des vis 15 dans un garnissage 17 emmanché au sommet du tube 7.

Bien entendu, les deux autres angles supérieurs du tronçon considéré sont assemblés rigidement de façon analogue et le croisillonnement de la structure réelle est reproduit sur la maquette de façon que chaque tronçon de la maquette pris individuellement forme un ensemble indéformable rigide sous les efforts qui lui seront appliqués.

Sur la Fig. 2, on a représenté également l'angle inférieur du tronçon de maquette suivant, placé immédiatement au-dessus du tronçon précédent. Le tronçon de maquette suivant est construit de la façon qui vient d'être décrite et on voit sur la Fig. 2, l'extrémité inférieure du tube ou profile 7' qui forme l'une des arêtes sensiblement verticales de ce tronçon et qui viendra dans le prolongement du tube 7 une fois les deux tronçons assemblés.

L'assemblage élastique déformable entre deux tronçons adjacents, qui va être décrit maintenant, est réalisé de façon telle qu'il existe un jeu entre les éléments correspondants en regard des deux tronçons considérés et, notamment, un jeu entre l'extrémité du tube 7' et la face supérieure de la plaque d'équerrage 11, ce jeu autorisant les déplacements de translation horizontaux dans une direction déterminée d'un tronçon par rapport à son voisin sous l'effet des efforts appliqués, à l'exclusion de tout déplacement significatif vertical ou transversal autre que la translation précédente d'un tronçon par rapport à l'autre.

Le système d'assemblage élastique utilise, comme point d'appui sur le tronçon inférieur, la plaque d'equerrage 11 et, plus précisément, un prolongement 21—23 solidaire de cette plaque et il utilise, comme point d'appui sur le tronçon supérieur, une pièce support 25, de préférence en forme de potence, solidaire de l'extrémité inférieure du tube 7', cette pièce étant par exemple maintenue sur le tube par des vis 27 qui se vissent dans un garnissage intérieur 29 du tube 7'.

Le système d'assemblage de deux tronçons consécutifs est réalisé sous la forme de liaisons élastiques à lames parallèles formant un dispositif dynamométrique qui permet, en chaque point d'assemblage pour éviter l'imprécision résultant d'un éventuel manque de rigidité de certains éléments de tronçons, d'évaluer dans la section de mesure la composante horizontale de l'effort tranchant tout en limitant les déplacements relatifs des différents tronçons à des translations dont la composante verticale est négligeable.

Une liaison comprend un premier organe de suspension constitué par une mince lame métallique flexible normalement tendue 31 dont l'extrémité inférieure est fixée, par des vis 33, à la partie inférieure de la pièce support 25 et dont l'extrémité supérieure est fixée, par des vis 35, à la partie supérieure de la potence 23 solidaire de la plaque d'équerrage 11. Des décrochements et ajourages convenables dans les pièces 25 et 23 permettent le libre débattement de la lame 31 qui assure la résistance de la maquette aux efforts de compression.

La liaison élastique comprend également un élément dynamométrique constitué par une seconde lame élastique 37 disposée inversement par rapport à la lame 31, c'est-à-dire que son extrémité inférieure est fixée, par des vis 39, sur le pied 41 du prolongement 23 solidaire de la plaque d'équerrage 11 et que son extrémité supérieure est fixée, par des vis 43, sur la face extérieure de la potence 25.

La lame 37 est facilement accessible et interchangeable, si bien qu'on peut disposer d'un jeu de lames de flexibilités différentes permettant de régler la raideur du système de liaisons conformément aux caractéristiques de la structure projetée.

Enfin, le système d'assemblage comprend un ou plusieurs capteurs détectant les déplacements relatifs des deux tronçons adjacents; l'utilisation d'un capteur par liaison permet de s'affranchir d'un défaut éventuel de rigidité de la maquette. N'importe quel type de capteurs de déplacement classique, notamment ceux transformant un déplacement en une grandeur électrique, peut être utilisé. On a représenté à titre d'exemple un capteur-transducteur du type à réluctance variable qui comprend une bobine 45 qui est fixée par des vis 46 sur la plaque d'equerrage 11 (et par conséquent, solidaire du tronçon inférieur) et dans laquelle se déplace un noyau 47 rendu solidaire, par une tige 49, de la pièce support 25 (et par conséquent, du tronçon supérieur).

Le système d'assemblage qui vient d'être décrit constitue un dynamomètre à déplacement parallèle du point d'application permettant de mesurer, en chacun des points localisés sur la maquette, des déplacements et des forces indépendamment du point d'application de la force; ce type de dynamomètre est en effet peu sensible aux couples (en particulier au couple de renversement qui correspond aux efforts hydrodynamiques exercés sur la structure par la houle et les courants) qui ont pour effet de modifier la tension des lames et d'accroître le risque de flambement de celles-ci. Ce risque se trouve réduit par la situation des liaisons à la périphérie des sections, ce qui entraîne une réduction des efforts verticaux (couple de renversement) et transversaux (couple de torsion) d'autant plus appréciable que les liaisons d'une même section sont plus écartées les unes des autres.

Grâce au système à double lames à disposition inversée, chaque dynamomètre peut supporter, sans modification notable de la précision des mesures, les efforts alternés de traction et de compression qui peuvent résulter soit des efforts verticaux soit des moments fléchissants imposés à l'ensemble de la structure pendant l'essai.

Pour chacun des essais au bassin, les résultats des mesures des capteurs sont comparés pour en tirer les informations sur le comportement à la mer et en service de la structure réelle.

Bien entendu, l'agencement des liaisons élastiques peut être différent de celui qui a été décrit et, notamment les systèmes de fixation des lames élastiques à support et potence peuvent être inversés, c'est-à-dire que l'ensemble des lames peut se trouver au niveau de l'extrémité supérieure du tronçon inférieur ou bien encore au niveau de l'intervalle existant entre les deux tronçons.

Les éléments élastiques qui forment un système de raideur donnée ne sont pas nécessairement identiques entre eux; ils peuvent être de longueurs et de formes différentes (sections et profils) en fonction de limites imposées (amplitude des mouvements relatifs, linéarité, etc...) et de la distribution des tensions dans les éléments élastiques de liaison.

## Revendications

1. Procédé pour l'étude sur maquette des déformations élastiques subies sous charges par des structures, ouvrages et constructions de grandes dimensions, caractérisé en ce qu'il consiste: à établir la maquette sous la forme d'une pluralité de tronçons séparés; à réaliser chaque tronçon de maquette sous la forme d'un élément individuel rigide sensiblement exempt d'élasticité; à assembler les tronçons de maquette les uns aux autres pour reproduire la structure complète à étudier, l'assemblage de chaque tronçon avec les tronçons voisins étant fait au moyen d'organes de liaison élastiques dynamométriques de souplesse déterminée localisant aux points d'assemblage les déformations élastiques de l'ensemble de la maquette; à mesurer l'amplitude des déformations locales de chacun desdits organes de liaison lorsque la maquette est soumise à des contraintes déterminées; et à cumuler ces mesures pour en déduire les déformations globales subies par la maquette et, partant, les déformations que subira la structure réelle dans des conditions de contraintes équivalentes.

2. Installation pour la mise en oeuvre du procédé, suivant la revendication 1, pour l'étude sur une maquette du comportement à la mer d'une structure hydro-élastiquement déformable de grandes dimensions, notamment d'une structure métallique verticale de grande hauteur pour forages sous-marins, caractérisée; en ce que la maquette est réalisée au moyen de tronçons (T) séparés divisant la structure (1) en une pluralité de tranches horizontales qui sont superposées; en ce que chaque tronçon est assemblé au tronçon immédiatement inférieur par un système de suspension travaillant en traction faisent partie des organes de liaison élastiques dynamométriques précités; et en ce que des capteurs de déplacements (45, 47) sont interposés entre chaque tronçon et le tronçon immédiatement adjacent; lesdits capteurs détectant les déformations locales entre chaque paire de tronçons.

3. Installation suivant la revendication 2, caractérisée en ce que chaque tronçon ($T_1$) est raccordé au tronçon adjacent ($T_2$) par au moins trois ensembles de raccordement et de détection de déformation ($L_1$, $L'_1$ et $L''_1$), situés sensiblement dans un plan horizontal, et comprenant chacun un organe de suspension travaillant en traction (31), un organe élastique dynamomètrique (37) travaillant en opposition du précédent dans le sens vertical et un capteur de déplacement (45, 47).

4. Installation suivant la revendication 3, caractérisée en ce que l'organe de suspension précité comprend une lame verticale tendue (31) solidaire, par son extrémité supérieure d'un tronçon (23, $T_1$) de la maquette et solidaire, par son extrémité inférieure, du tronçon (25, $T_2$) immadiatement supérieur.

5. Installation suivant les revendications 3 et 4, caractérisée en ce que chaque ensemble de raccordement et de détection de déformation comprend un élément en forme de potence (25) solidaire de l'un au moins des tronçons adjacents, ledit élément constituant le point de fixation de l'une des extrémités de la lame tendue (31) précitée.

## Patentansprüche

1. Verfahren zur Untersuchung an einem Modell der elastischen Verformungen, die Lasten an Strukturen, Bauten und Konstruktionen grosser Abmessungen hervorrufen, dadurch gekennzeichnet, dass das Modell in Form einer Vielzahl von getrennten Abschnitten gebaut wird, das jeder Abschnitt des Modells in Form eines steifen und praktisch nicht elastischen Einzelteils hergestellt wird, dass die Abschnitte des Modells so zusammengesetzt werden, dass die vollständige zu untersuchende Struktur entsteht, wobei der Zusammenbau jedes Abschnitts mit den benachbarten Abschnitten mit Hilfe von dynamometrischen elastischen Verbindungen erfolgt, deren Beweglichkeit so ausgelegt ist, dass an den Verbindungspunkten die elastischen Verformungen des gesamten Modells erreicht werden; dass die Amplitude der örtlichen Verformungen jedes dieser Verbindungsmittel gemessen wird, wenn das Modell den vorgegebenen Beanspruchungen ausgesetzt wird, dass diese Messungen zusammengenommen werden, um daraus die Gesamtverformungen abzuleiten, die das Modell aufnimmt, sowie die sich daraus ergebenden Verformungen, die die tatsächliche Struktur unter gleichwertigen Beanspruchungsbedingungen aufnehmen wird.

2. Anlage zur Verwendung des Verfahrens nach Anspruch 1, für die Untersuchung an einem Modell, des Verhaltens im Meer einer hydroelastisch verformbaren Structur grosser Abmessungen, insbesondere einer senkrechten Metallstruktur grosser Höhe für Unterseebohrungen, dadurch gekennzeichnet, dass das Modell mit Hilfe von Abschnitten (T) hergestellt wird, die die Struktur (1) in eine Vielzahl von übereinanderleigenden waagrechten Schichten unterteilen; das jeder Abschnitt mit dem direkt unter ihm liegenden Abschnitt durch ein Aufhängungssystem verbunden ist, das ziehend arbeitet und zu den vorstehend erwähnten dynamometrischen elastischen Verbindungsteilen gehört, und dadurch, dass Bewegungsmessdosen (45—47) zwischen jedem Abschnitt und dem direkt neben ihm liegenden Abschnitt eingebaut sind; diese Messdosen stellen die örtlichen Verformungen zwischen den Abschnitten jedes Paares fest.

3. Anlage nach Anspruch 2, dadurch gekennzeichnet, dass jeder Abschnitt $(T_1)$ an den benachbarten Abschnitt $(T_2)$ durch mindestens drei Vorrichtungen zum Anschluss und zur Feststellung von Verformungen $(L_1, L'_1 \text{ und } L''_1)$ angeschlossen ist, die sich praktisch in einer waagrechten Ebene befinden und je ein Aufhängungsbauteil enthalten, das auf Zug beansprucht wird (31), sowie ein dynamometrisches elastisches Bauteil, (37), das in Gegenwirkung zu dem vorhergehenden in senkrechter Richtung arbeitet, und eine Bewegungsmessdose (45, 47).

4. Anlage nach Anspruch 3, dadurch gekennzeichnet, dass das vorstehend angeführte Aufhängungs-Bauteil ein senkrechtes gespanntes Blatt (31) aufweist, das an seinem oberen Ende mit einem Abschnitt $(23, T_1)$ des Modells verbunden ist und an seinem unteren Ende mit dem direkt darüberleigenden Abschnitt $(25, T_2)$ verbunden ist.

5. Anlage nach Abschnitten 3 und 4, dadurch gekennzeichnet, dass jedes Bauteil zum Anschluss und zur Feststellung der Verformungen ein Bauteil in Galgenform aufweist (25), das mit mindestens einem der benachbarten Abschnitte verbunden ist, wobei dieses Bauteil den Befestigungspunkt eines der Enden des oben angeführten gespannten Blattes (31) darstellt.

## Claims

1. Method for the study on models of the elastic deformations of large structures, works and buildings under load, the method consisting of: building the model in the form of a plurality of separate sections, each model section being built in the form of an individual rigid component substantially free of elasticity, assembling the model sections together to reproduce the complete structure to be studied, assembling each section with the neighboring sections by load measuring elastic link components of determined flexibility localizing the elastic deformations of the whole model at assembly points, measuring the amplitude of the local deformations of each of the said link components when the model is being subjected to determined stresses, and cumulating these measurements to deduce the overall deformations to which the model has been subjected and, consequently, the deformations to which the real structure will undergo under equivalent stress conditions.

2. Realization, for the implementation of the method, according to claim 1, for the study on a model of the behavior at sea of a large hydroelastically deformable structure, particularly a high vertical metal structure for undersea drilling, the model being built of separate sections (T), dividing the structure (1), into a plurality of horizontal slices which are superimposed and each section is assembled to the section immediately below it by a system of suspension working in tension, integrated with the above-mentioned link components, movement sensors (45, 47) being interposed between each section and the immediately adjacent section to detect the local deformations between each pair of sections.

3. Realization, according to claim 2, each section $(T_1)$ being connected to the adjacent section $(T_2)$, by at least three connection and deformation detection units $(L_1, L'_1 \text{ and } L''_1)$, located substantially in a horizontal plane, and each comprising a suspension component working in tension (31), a load measuring elastic component (37), working in opposition to the preceding one in the vertical direction, and a movement sensor (45, 47).

4. Realization according to claim 3, the above-mentioned suspension component comprising a stretched vertical strip (31), integrated by its upper extremity to a section (23, T), of the model and integrated by its lower extremity to the section $(25, T_2)$, immediately above it.

5. Realization according to claims 3 and 4, each connection and deformation detection unit comprising at least one component in the form of a "T" (25) integrated to at least one of the adjacent sections, the said component constituting the attachment point for at least one of the extremities of the above-mentioned streched strip (31).

# FIG.1

0 005 088

FIG, 2

FIG, 3